# EUROPEAN PATENT APPLICATION

(11) **EP 2 107 484 A2**
(43) Date of publication of application: **07.10.2009**
(21) Application number: 09155224.0
(22) Date of filing: 16.03.2009
(51) Int. Cl.: G06F 21/00, G06F 11/36

(54) **A method and device for code audit**

(30) Priority: 03.04.2008 CN 200810088906
(71) Applicant: Siemens Aktiengesellschaft, 80333 München (DE)
(72) Inventor: Hu, Jian Jun, 100102, Beijing (CN); Sui, Ai Fen, 100102, Beijing (CN); Tang, Wen, 100102, Beijing (CN)

(57) **Abstract**

The present invention discloses a code audit method, comprising the steps of: tracing a variable in source codes to acquire the processing nodes that process the variable; determining the parent processing nodes of the processing nodes as well as the security attribute of the processing nodes; individually comparing the security attribute of the processing nodes and the security attribute of their parent processing nodes and, in case the security attribute of the parent processing node of a processing node is not a subset of the security attribute of the processing node, determining that there are security vulnerabilities in the processing node. In addition, the present invention further discloses a code audit device. Since the technical solution of the present invention determines whether there are any vulnerabilities in the processing nodes according to their logic for variable processing, it can improve the accuracy of the code audit and truly, accurately reflect any security vulnerabilities in the source codes.

## Description

### Field of the Invention

The present invention relates to the information security technology, and more particularly to a method and device for code audit.

### Background of the Invention

Currently, the security of program codes used in the information system directly determines the security of the information system. Security vulnerability in program codes is one of the major factors causing unstable and vulnerable information systems. If the security vulnerabilities in the program codes are used by attackers, they can gain access to important data, resources or processes and add, modify or delete the process or control stream in the information system, causing problems like leakage of important data and system failure and leading to great loss for the users of information system who are unable to obtain safe, reliable services.

In the prior art, keyword matching is a technical solution frequently used in the code audit technology. The technology records the characteristic characters corresponding to the security vulnerabilities, scans the source codes of the information system based on the characteristic characters and treat any source code segments that have the characteristic character as having security vulnerabilities in them. For example, supposing the characteristic character string is "strcpy" for a keyword matching process, then all locations in the source codes where the string "strcpy" appears following a source code scan are considered as having security vulnerabilities. However, an analysis of the actual application process shows that not all locations where the string "strcpy" appears are security vulnerabilities. Since "strcpy" represents a copy function of character string, source code segments are security vulnerabilities only when the length of the source character string is greater than that of the destination character string. Moreover, the determination of characteristic characters in keyword matching technology mainly relies on analysis of security vulnerabilities that have already been found, which means the determination of characteristic characters is limited to security vulnerabilities that have already been analyzed and, therefore, the technology is, to a great extent, not suitable for a wide range of applications. As a result, the characteristic character cannot fully reflect the characteristic of a security vulnerability, causing frequent false detection and missing detection of security vulnerabilities during use.

From this brief analysis of the prior art it can be easily concluded that the keyword matching technology is to match characteristic characters with the corresponding security vulnerabilities and can often have false detection or missing detection during its use, which greatly affects the accuracy of code audit and is unable to accurately reflect the security vulnerabilities in the source codes.

### Summary of the Invention

In view of these problems, the main purpose of the present invention is to provide a code audit method and use of the method of the present invention can improve the accuracy of code audit and truly, accurately reflect the security vulnerabilities present in the source codes without compromising the efficiency of code audit.

In order to achieve these purposes, the technical solution of the present invention is achieved through,
a code audit method, comprising the steps of:
tracing a variable in the source codes to acquire the processing nodes that process the variable;
determining the parent processing node of the processing nodes as well as the security attribute of the processing nodes;
individually comparing the security attribute of the processing nodes and the security attribute of their parent processing nodes and, in case the security attribute of the parent processing node of a processing node is not a subset of the security attribute of the processing node, determining that there are security vulnerabilities in the processing node.

Preferably, the method further comprises: sending an alarm message when determining that there are security vulnerabilities in the processing node.

Preferably, the method further comprises: determining the externally associated variable and using it as the variable to be traced currently.

Preferably, said determination of the parent processing nodes of the processing node comprises: using the form of a reference tree to determine the parent processing nodes of the processing nodes.

Preferably, the method further comprises: determining the processing nodes that need security vulnerability detection;
said comparison of the security attribute of the processing nodes and the security attribute of their parent processing nodes comprises individually comparing the security attribute of the processing nodes that need security vulnerability detection and the security attribute of their parent processing nodes.

Preferably, said security attribute is described in the form of a regular expression and/or access control list.

Preferably, the method further comprises: sending suggestions on modifying the security attribute of the parent processing node of the processing node that has security vulnerability so that the security attribute of the patent processing node becomes a subset of the security attribute of the processing node.

A device for code audit, comprising a search unit and a discovery unit;
said search unit is used to trace a variable in source codes to acquire the processing nodes that process the variable; determining the parent processing nodes of the processing nodes and the security attribute of the processing nodes;
said discovery unit is used to individually compare the security attributes of the processing node and of their parent processing nodes according to the processing nodes, their parent processing nodes and their security attributes as determined by the search unit, and, in case the security attribute of the parent processing node of a processing node is not a subset of the security attribute of the processing node, determining that there are security vulnerabilities in the processing node.

Preferably, the device further comprises an alarm unit;
said alarm unit is used to send an alarm message regarding the processing node that is determined by the discovery unit as having security vulnerability.

Preferably, the device further comprise an access unit;
said access unit is used to determine the externally associated variable and uses it as the variable to be traced by the search unit.

Preferably, said search unit comprises a processing unit, a building unit and an acquisition unit;
said processing unit is used to individually trace the externally associated variables in the source codes that are determined by said access unit to acquire the processing nodes that process the externally associated variables;
said building unit is used to build a reference tree for said externally associated variables that describes the relations between the parent and child nodes of the processing node acquired by the processing unit;
said acquisition unit is used for setting up the security attribute of the processing nodes in the reference tree created by the building unit.

Preferably, the device further comprises a storage unit;
said storage unit is used to record the processing nodes that need security vulnerability detection;
said discovery unit is used to individually compare the security attribute of the processing nodes that need detection and of their parent processing nodes for the externally associated variables determined by said access unit according to the processing nodes, their parent processing nodes and their security attributes determined by the search unit as well as the processing nodes that need security vulnerability detection as recorded by the storage unit, and, in case the security attribute of the parent processing node of a processing node is not a subset of the security attribute of the processing node, determining that there are security vulnerabilities in the processing node.

Since the technical solution according to the present invention determines whether there are security vulnerabilities in the processing nodes based on their logic for variable processing, it can improve the accuracy of code audit and truly, accurately reflect the security vulnerabilities present in the source codes. In addition, the technical solution according to the present invention can determine whether there are security vulnerabilities only for the processing nodes that process the externally associated variables and for the processing nodes that need security vulnerability detection, which can reduce the calculation for code audit and further improves the efficiency of code audit.

### Descriptions of the Drawings

The illustrative embodiments according to the present invention will be further described below with reference to the figures so that those ordinary skill in the art can understand the aforesaid and other features and advantages of the present invention, wherein:
Fig. 1 shows an illustrative flow chart of the method according to the invention;
Fig. 2 is a diagram showing an illustrative structure of the device according to the invention;
Fig. 3 shows a flow chart of the method described in the embodiment 1 according to the invention;
Fig. 4 is a schematic diagram of the reference tree corresponding to the embodiment 1 according to the invention;
Fig. 5 is a diagram showing the structure of the device described in the embodiment 1 according to the invention;
Fig. 6 is a flow chart of the method described in the embodiment 2 according to the invention;
Fig. 7 is a structure diagram of the device described in the embodiment 2 according to the invention;
Fig. 8 is a schematic diagram of a reference tree according to the invention;
Fig. 9 is a schematic diagram of another reference tree according to the invention.

### Descriptions of the Embodiments

By analyzing how the program codes are attacked, the inventors of the present invention discovered the reason why the program codes have security vulnerabilities and can be used by the attackers is that some processing nodes in the source codes often, actively or passively, perform some processing that is unwanted by themselves.

Based on this analysis of the security vulnerabilities in program codes, the technical solution according to the present invention mainly compares the security attribute of the processing nodes and the security attribute of their parent processing nodes in the source codes, and if the security attribute of the parent processing node of a processing node is a subset of the security attribute of the processing node, it is determined that there is no security vulnerability in the processing node; if the security attribute of the parent processing node of a processing node is not a subset of the security attribute of the processing node, it is determined that there is security vulnerability in the processing node. In other words, supposing the security attribute of the current processing node is *S* and the security attribute of its parent processing node is *F*, it is determined that there is no security vulnerability in the current processing node if *F* ⊆ *S* and there is security vulnerability in the current processing node if *F* ⊄ *S*.

In order to make the technical solution of the invention more understandable, the processing node, parent processing node and security attribute of the processing node are described below. The processing node refers to the logic node in the source codes that processes variables. The variables processed by the processing node can be, for example, a numerical value, character(s), a character string or pointer, etc. The processing of the variables by the processing node is, for example, arithmetic calculation, value assignment, copy or overwrite, etc. A processing node can be a function, application program interface (API), dynamic link library (DLL) interface or system call interface. For example, a character string processing node "strcpy (deststr, srcstr)" is a function that means copying the content of the source character string "srcstr" to the destination character string "deststr".

If the processing node 1 transfers a variable to the processing node 2, or in other words, the processing node 2 acquires the variable from the processing node 1, then the processing node 1 is called the parent processing node of the processing node 2. Accordingly, the processing node 2 can be called the child processing node of the processing node 1. The variable transfer between said processing node 1 and processing node 2 is normally achieved through parameter transfer. For example, a processing node "scanf (%s, srcstr)" means assigning the input data from a standard input device to the character string variable "srcstr". If the character string variable, srcstr, is an input parameter of another processing node "strcpy (deststr, srcstr)", then the processing node "scanf (%, srcstr)" is called the parent processing node of the processing node "strcpy (deststr, srcstr)". A processing node may have multiple input parameters, and accordingly the processing node may have multiple parent processing nodes.

The security attribute of a processing node is the processing operations that can be performed by the processing node as determined by the processing logic of the processing node itself. Depending on the applications of the source codes, the security attribute of a processing node can include, for example, the character strings that can be processed by the processing node, the length of the character strings and the authority to access the character strings. The security attribute of a processing node can be described in the form of a regular expression (regex) and/or access control list (ACL). In which case, the regular expression is normally used for performing pattern matching, and access control list is normally used to represent the access authority. In the embodiments of the present invention below, the security attribute that is described in machine-recognizable expression patterns like a regular expression and/or access control list is referred to as Formulated Security Restrictions (FSR). For example, in source codes using SQL statements, the security attribute of a processing node can be described as a regular expression,
{FSR: ^(?!(/(\w*((\%27)|(\'))((\%6F)|o|(\%4F))((\%72)|r|(\%52))/ix).)*$},
which means the variables that can be processed by the processing node cannot include keywords like "'", "*", "and" and "or" in SQL statements. Specifically, during the specific implementation of the present invention, the security attribute of a processing node can be determined based on the programming method and programming language of the source codes and the processing logic of the processing node.

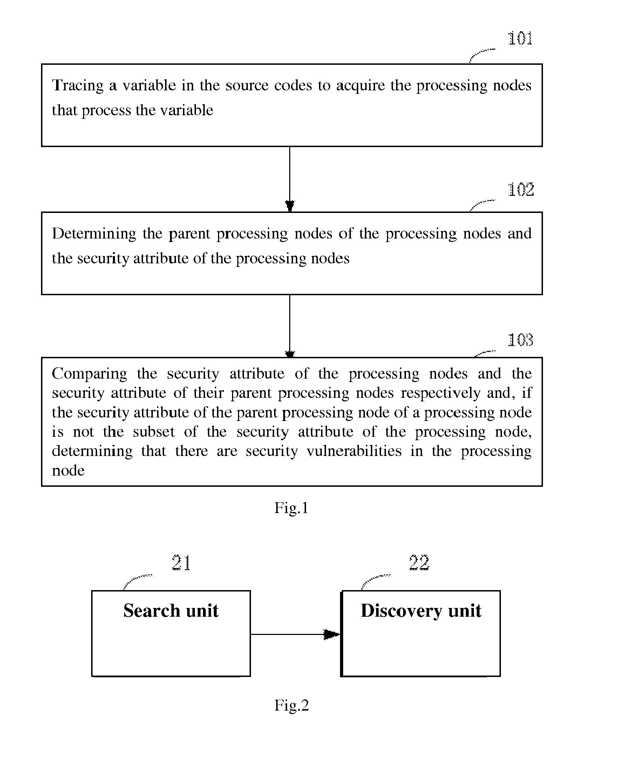

In combination with the above descriptions, refer to Fig.1, which is a schematic flow chart of the method according to the present invention. The specific process comprises: in step 101, tracing a variable in the source codes to acquire the processing nodes that process the variable; in step 102, determining the parent processing node of the processing nodes and the security attribute of the processing nodes; in step 103, individually comparing the security attribute of the processing nodes and the security attribute of their parent processing nodes and, if the security attribute of the parent processing node of a processing node is not a subset of the security attribute of said processing node, determining that there are security vulnerabilities in the processing node.

Refer to Fig.2, which is a schematic structure diagram of the device according to the present invention. The device comprises a search unit 21 and a discovery unit 22. In which case, the search unit 21 is used for tracing a variable in the source codes to acquire the processing nodes that process the variable; determining the parent processing nodes and the security attribute of the processing nodes. The discovery unit 22 is used for individually comparing the security attributes of the processing nodes and of their parent processing nodes according to the processing nodes, their parent processing nodes and their security attribute determined by the search unit 21, and determining that there are security vulnerabilities in the processing node if the security attribute of the parent processing node of a processing node is not a subset of the processing node.

As can be understood from the aforesaid descriptions of the processing node, as regards a variable in the source code, the source codes may have multiple processing nodes that process the variable and the relation of the parent and child processing nodes is formed among these processing nodes. For different variables in the source codes, each variable may correspond to multiple processing nodes and the relation of parent and child processing nodes is formed among the processing nodes corresponding to each variable. Therefore, when security vulnerability detection is performed on the processing nodes corresponding to different variables in the source codes, said tracing of the processing nodes and comparison of the security attribute between the processing nodes may lead to considerable complexity of calculation.

As was understood by the inventors from further analysis of security vulnerabilities of program codes, some of the security vulnerabilities in the program codes can be used by attackers and others cannot. Since the security vulnerabilities that cannot be used by the attackers are not associated with any external factors such as external input, external entity interface or environmental entity, they cannot be used to cause damage to the information system even if attackers discover them. Based on this analysis, the preferred embodiments of the present invention perform code audit only for variables in the source codes that are associated with said external factors and not for said variables that are not associated with said external factors. In this way, not only the calculation complexity of the technical solution according to the invention can be reduced, the security vulnerabilities that can be used by attackers in the source codes can also be accurately detected, thus further improving the efficiency of code audit according to the present invention.

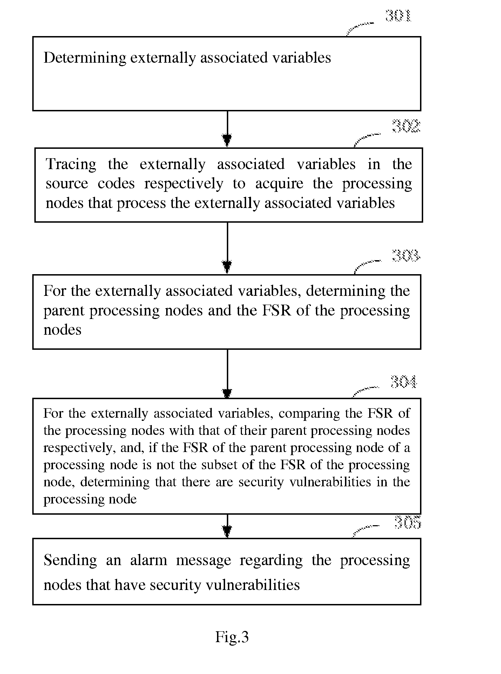

Fig.3 shows a flow chart of the method described in the preferred embodiment 1 according to the present invention. In this embodiment, code audit is performed only for variables in the source codes that are associated with said external factors. For simplicity of description, variables that are associated with said external factors are hereinafter referred to as externally associated variables.

Refering to Fig. 3, the method of the embodiment specifically comprises:
in step 301, determining the externally associated variables.

The externally associated variables determined here can be, for example, an input parameter of the standard input function scanf and/or input parameters of the application program interface for interaction with the external application entity interface or environmental entity.

In step 302, the externally associated variables in the source codes are traced respectively to acquire the processing nodes that process the externally associated variables.

Here, the externally associated variables can be traced based on the compiler technology used in programming.

In step 303, for the externally associated variables, the parent processing nodes of the processing node and FSR of the processing node are determined.

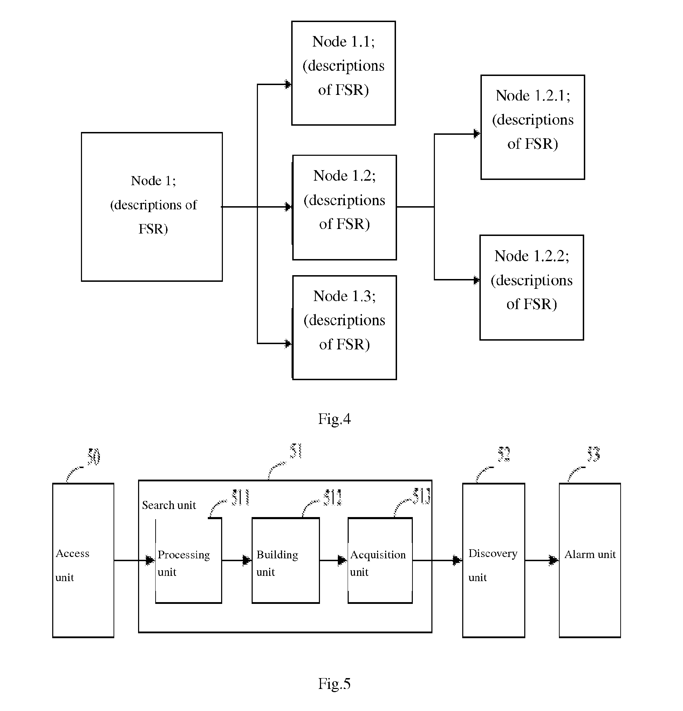

Here, a reference tree can be used to determine the parent processing nodes of the processing nodes. For example, for an externally associated variable, X, the reference tree formed by the processing nodes can be as shown as in Fig. 4. Refering to Fig. 4, the leftmost node in the figure is the root node of the reference tree and is denoted as node 1. The root node first processes the externally associated variable, X, and then transfers the processed externally associated variable X to the second-level node of the reference tree by means of a parameter transfer. There are three processing nodes in the second-level node of the reference tree, which are denoted as node 1.1, node 1.2 and node 1.3, respectively. Since the three nodes individually process the externally associated variable X that is processed by the root node, all of the three nodes are child processing nodes of node 1, i.e., the parent processing nodes of node 1.1, node 1.2 and node 1.3 are all node 1. For the current externally associated variable X, there is no variable transfer among three child nodes and so they do not form the relations of parent and child processing nodes and their relations are of parallel type. The second-level nodes transfer the externally associated variable X that is processed by them to the third-level nodes by means of a parameter transfer. As shown in Fig. 4, in second-level nodes, only node 1.2 has sub-level nodes, i.e. third-level nodes 1.2.1 and node 1.2.2. Since node 1.2.1 and node 1.2.2 respectively process the externally associated variable X that is processed by node 1.2, the two nodes are both child processing nodes of node 1.2 and there is a parallel relation between node 1.2.1 and node 1.2.2. For node 1.1 and node 1.3 in the second-level nodes, since there is no processing node in the source codes for processing the externally associated variable X that is outputted from the source codes, the node 1.1 and node 1.3 do not have a child processing node.

The method for determining the FSR of the nodes can be setting FSR for the processing nodes in the source codes and establishing the corresponding relations between the ID of the processing nodes and their FSR. During a code audit, the FSR of the processing nodes are acquired according to their ID. In which case, the FSR of the processing nodes can be set automatically according to the processing nodes' own processing logic, or can be manually input by the operator who will be prompted to do so during the code audit.

In step 304, for all the externally associated variables, the FSR of the processing nodes is compared with the FSR of their parent processing nodes respectively, and, if the FSR of the parent processing node of a processing node is not a subset of the FSR of the processing node, it is determined that there are security vulnerabilities in the processing node.

Here, the reference tree shown in Fig. 4 is also used as an example for the purposes of description. In Fig. 4, for externally associated variable X, there are in total 5 pairs of parent and child processing nodes, and they are pairs of node 1 and node 1.1, node 1 and node 1.2, node 1 and node 1.3, node 1.2 and node 1.2.1, and node 1.2 and node 1.2.2. In this step, for externally associated variable X, the FSR of the five pairs of parent and child processing nodes need to be compared respectively to determine the processing nodes that have security vulnerabilities.

In step 305, an alarm is sent for the processing node that has security vulnerabilities.

Once the processing nodes that have security vulnerabilities are determined, preferably an alarm is sent to indicate this. Here, the alarm message can contain the information about the location of the processing nodes that have security vulnerabilities to indicate the specific location of said processing nodes in the source codes, so as to help the operator to locate the security vulnerabilities accurately.

Corresponding to the flow chart of the method shown in Fig. 3, Fig. 5 shows the structure of the device described in the preferred embodiment 1 according to the present invention. Refering to Fig. 5, the device further comprises an access unit 50 and an alarm unit 53 in addition to the search unit 51 and discovery unit 52. The access unit 50 is used for determining the externally associated variable in the source codes. The search unit 51 is used to trace the externally associated variables determined by the access unit 50 in the source codes to acquire the processing nodes that process the externally associated variables, and to determine the parent processing nodes and the FSR of the processing nodes for the externally associated variables. The discovery unit 52 is used, for the externally associated variables, for comparing the security attributes of the processing nodes and their parent processing nodes respectively according to the processing nodes, their parent processing nodes and of their security attributes as determined by the search unit 51, and, if the security attribute of the parent processing node of a processing node is not a subset of the processing node, determining that there are security vulnerabilities in the processing node. The alarm unit 53 is used for sending an alarm message regarding the processing nodes that are determined by the discovery unit 52 as having security vulnerabilities in them.

In the code audit device of this embodiment, the search unit 51 can comprise a processing unit 511, a building unit 512 and an acquisition unit 513. In which case, the processing unit 511 is used for tracing the externally associated variables in the source codes respectively to acquire the processing nodes that process the externally associated variables. The building unit 512 is used, for said externally associated variables, for creating the reference tree that describes the relations between the parent and child processing nodes of the processing node acquired by the processing unit 511. The acquisition unit 513 is used for setting the security attribute of the processing nodes in the reference tree created by the building unit 512.

In the preferred embodiment 2 according to the present invention, the calculation complexity of code audit can be reduced by presetting the processing nodes that need security vulnerability detection, or prompting the operator to set the processing nodes that need security vulnerability detection during code audit, and checking for security vulnerability only in the processing nodes that need security vulnerability detection. Preferably, on the basis of the embodiment 1, the embodiment 2 according to the present invention further determines the processing nodes that need security vulnerability detection, and check for security vulnerability only in the processing nodes that need security vulnerability detection and skip the processing nodes that do not need security vulnerability detection. In this way, the calculation complexity of the technical solution according to the present invention is further reduced and the efficiency of code audit according to the present invention is improved.

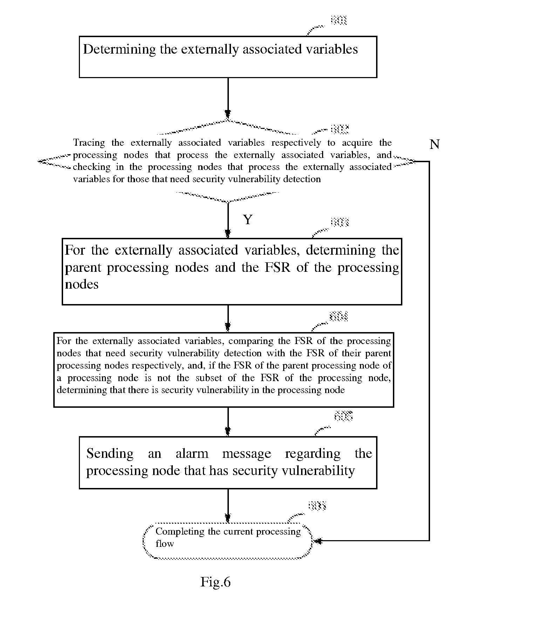

Refer to Fig. 6, which shows a flow chart of the method described in the embodiment 2 according to the present invention. In this embodiment, the processing nodes that need security vulnerability detection are preset. The setting of the processing nodes that need security vulnerability detection can be done by recording IDs of said processing nodes. The specific process of the method comprises:
in step 601, performing the same procedure as in step 301 of the embodiment 1, which is not further described herein;
in step 602, respectively tracing the externally associated variables in the source codes to acquire the processing nodes that process the externally associated variables, and checking in the processing nodes that process externally associated variables for any processing nodes that need security vulnerability detection, and if there is one, performing step 603; if there are none, performing step 606;
in step 603, for the externally associated variables, determining the parent processing nodes and the FSR of the processing nodes;
in step 604, for the externally associated variables, respectively comparing the FSR of the processing nodes that need security vulnerability detection and the FSR of their parent processing nodes, and, if the FSR of the parent processing node of a processing node is not a subset of the FSR of the processing node, it is determined that there is security vulnerability in the processing node.

In the embodiment, the method for creating the reference tree described in embodiment 1 can be used to create the reference tree for the processing nodes that process the externally associated variables and then check in the reference tree for the processing nodes that need security vulnerability detection. For the processing nodes that need security vulnerability detection, the relations between the parent and child processing nodes established in the reference tree and the FSR of the processing nodes are used to determine whether there are security vulnerabilities in said processing nodes.

In step 605, sending an alarm message regarding the processing nodes that have security vulnerabilities.

In step 606, completing the current processing flow.

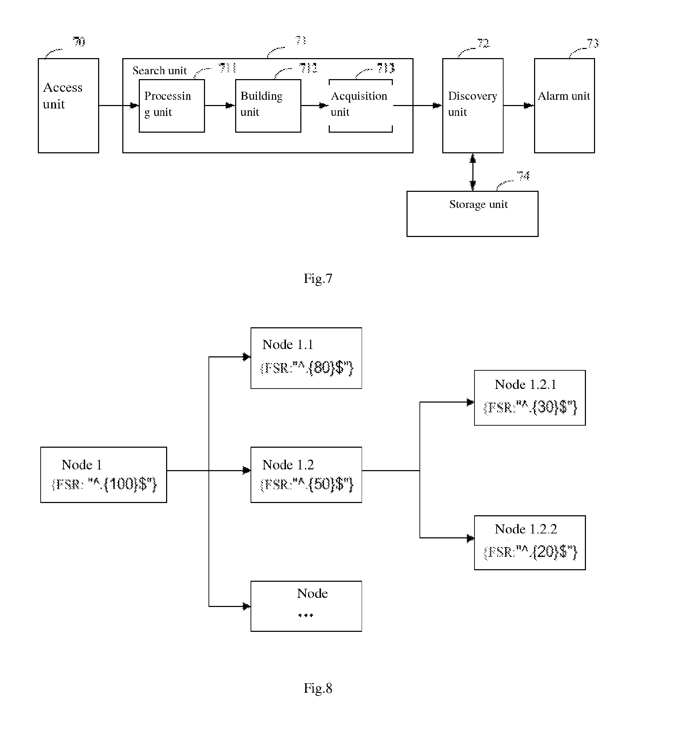

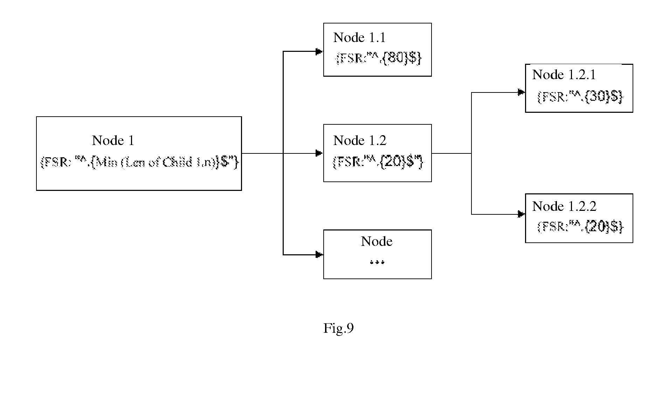

Refer to Fig. 7, which shows a flow chart of the device described in the embodiment 2 according to the present invention. Corresponding to Fig. 5, the device shown in Fig. 7 further comprises a storage unit 74, in addition to the access unit 70, the search unit 71, the discovery unit 72 and the alarm unit 73, wherein the search unit 71 comprises a processing unit 711, a building unit 712 and an acquisition unit 713. In which case, the storage unit 74 is used for recording the processing nodes that need security vulnerability detection. Accordingly, the discovery unit 72 is used for, for the externally associated variables, comparing the security attributes of the processing nodes and their parent processing nodes respectively according to the processing nodes, their parent processing nodes and the FSR of the processing nodes as determined by the search unit 71 as well as the processing nodes that need security vulnerability detection as recorded by the storage unit 74, and, if the security attribute of the parent processing node of a processing node is not a subset of the security attribute of the processing node, determining that there are security vulnerabilities in the processing node. Moreover, during the specific implementation of the present invention, for a processing node that has security vulnerability, it may further comprise sending suggestions on modifying the security attribute of the parent processing node to make it a subset of the security attribute of the processing node. For specific information, refer to the descriptions of Fig. 8 and Fig. 9 below.

As shown in Fig. 8, the FSR corresponding to node 1 is {FSR: "^.{100}$"}, which means it can receive input of 100 characters; the FSR of node 1.1 is {FSR:"^.{80}$"}, which means it can receive input of 80 characters; the FSR of node 1.2 is {FSR:"^.{ 50}$"}, which means it can receive input of 50 characters; the FSR of node 1.2.1 is {FSR:"^.{ 30}$"}, which means it can receive input of 30 characters; the FSR of node 1.2.2 is {FSR:"^.{ 20}$"}, which means it can receive input of 20 characters. According to the technical solution provided by the present invention, the node 1.2 as the parent processing node of the node 1.2.1 and node 1.2.2 has FSR that is not a subset of the FSR of node 1.2.1 and node 1.2.2, so it is determined that there are security vulnerabilities in the node 1.2.1 and node 1.2.2, and additionally, from the expression of the FSR it can be understood that there is security vulnerability of buffer overflow in the node 1.2.1 and node 1.2.2; in addition, the node 1 as the parent processing node of the node 1.1 and node 1.2 has FSR that is not a subset of the FSR of node 1.1 and node 1.2, so it is determined that there are security vulnerabilities in the node 1.1 and node 1.2, and additionally, from the expression of FSR it can be understood that there is security vulnerability of buffer overflow in the node 1.1 and node 1.2.

For the security vulnerabilities in the node 1.2, node 1.2.1 and node 1.2.2, it is possible to send suggestions of modifying the security attribute of their respective parent processing nodes. Here, the specific suggestions on modification can be as shown in Fig. 9 so that after modification the FSR of the node 1.2 is {FSR:"^.{ 20}$"}where the FSR of node 1.2 is the subset of the FSR of the node 1.2.1 and node 1.2.2 and after modification the FSR of the node 1 is {FSR: "^.{Min (Len of Child 1.n)}$"}, meaning the length of the character string that can be processed by the node 1 is the minimum length of the character string that can be processed by all of its child nodes. After such modification, the FSR of the node 1 becomes the subset of the FSR of the node 1.1 and node 1.2, and the FSR of node 1.2 becomes the subset of the FSR of node 1.2.1 and node 1.2.2 so that the node 1.1, node 1.2, node 1.2.1 and node 1.2.2 will not process any extra characters that are unwanted by themselves. In this way, the security vulnerabilities of the buffer overflow in these nodes can be overcome.

The technical solution provided by the present invention can accurately and quickly locate the security vulnerabilities present in the source codes including code insertion, buffer overflow, increased access authority and information leakage.

The technical solution provided by the present invention improves the accuracy of code audit and can accurately reflect any security vulnerabilities in the source codes through comparing the security attribute of the processing nodes and the security attribute of their parent processing nodes in the source codes and, if the security attribute of the parent processing node of a processing node is not the subset of the security attribute of the processing node, determining that there is security vulnerability in the processing node. Moreover, the embodiment according to the present invention can determine whether there are security vulnerabilities only in the processing nodes that process the externally associated variables and in the processing nodes that need security vulnerability detection, so that it can reduce the calculation for code audit and further improve the efficiency of code audit.

The above description only shows the preferred embodiments according to the present invention, and is not intended to limit the protective scope of the present invention. Any modification, equivalent replacement and improvement without departure from the spirit and principle of the present invention should fall within the scope of protection of the present invention.

## Claims

1. A code audit method, comprising the steps of:
tracing a variable in the source codes to acquire the processing nodes that process the variable;
determining the parent processing node of the processing nodes as well as the security attribute of the processing nodes;
individually comparing the security attribute of the processing nodes and the security attribute of their parent processing nodes and, in case the security attribute of the parent processing node of a processing node is not a subset of the security attribute of the processing node, determining that there are security vulnerabilities in the processing node.

2. The method as claimed in claim 1, **characterized in that,** said method further comprises: sending an alarm message when determining that there are security vulnerabilities in the processing node.

3. The method as claimed in claim 1, **characterized in that,** said method further comprises: determining the externally associated variable and using it as the variable to be traced currently.

4. The method as claimed in claim 3, **characterized in that,** said determination of the parent processing nodes of the processing nodes comprises: using the form of a reference tree to determine the parent processing node of the processing nodes.

5. The method as claimed in any one of claims 1 to 4, **characterized in that:** said method further comprises:
determining the processing nodes that need security vulnerability detection;
said comparison of the security attribute of the processing nodes and the security attribute of their parent processing nodes comprises, individually comparing the security attribute of the processing nodes that need security vulnerability detection and the security attribute of their parent processing nodes.

6. The method as claimed in any one of claims 1 to 4, **characterized in that,** said security attribute is described in the form of a regular expression and/or access control list.

7. The method as claimed in any one of claims 1 to 4, **characterized in that**, the method further comprises: sending suggestions on modifying the security attribute of the parent processing node of the processing node that has security vulnerability so that the security attribute of the parent processing node becomes a subset of the security attribute of the processing node.

8. A code audit device, comprising a search unit and a discovery unit;
said search unit is used to trace a variable in the source codes to acquire the processing nodes that process the variable; to determine the parent processing nodes of the processing nodes and the security attribute of the processing nodes;
said discovery unit is used to individually compare the security attributes of the processing nodes and of their parent processing nodes according to the processing nodes, their parent processing nodes and their security attributes as determined by the search unit, and, in case the security attribute of the parent processing node of a processing node is not a subset of the security attribute of the processing node, determining that there are security vulnerabilities in the processing node.

9. The device as claimed in claim 8, **characterized in that,** the device further comprises an alarm unit;
said alarm unit is used to send an alarm message regarding the processing node that is determined by the discovery unit as having security vulnerability.

10. The device as claimed in claim 8 or claim 9, **characterized in that**, the device further comprises an access unit;
said access unit is used to determine the externally associated variable and uses it as the variable to be traced by the search unit.

11. The device as claimed in claim 10, **characterized in that**, said search unit comprises a processing unit, a building unit and an acquisition unit;
said processing unit is used to individually trace the externally associated variables in the source codes that are determined by said access unit to acquire the processing nodes that process the externally associated variables;
said building unit is used to build a reference tree for said externally associated variables that describes the relations between the parent and child nodes of the processing nodes acquired by the processing unit;
said acquisition unit is used for setting up the security attribute of the processing node in the reference tree created by the building unit.

12. The device as claimed in claim 10, **characterized in that**, the device further comprises a storage unit;
said storage unit is used to record the processing nodes that need security vulnerability detection;
said discovery unit is used to individually compare the security attribute of the processing nodes that need detection and of their parent processing nodes for the externally associated variables determined by said access unit according to the processing nodes, their parent processing nodes and their security attributes determined by the search unit as well as the processing nodes that need security vulnerability detection as recorded by the storage unit, and, in case the security attribute of the parent processing node of a processing node is not a subset of the security attribute of the processing node, determining that there are security vulnerabilities in the processing node.
